# EUROPEAN PATENT APPLICATION

(11) **EP 0 893 923 A1**
(43) Date of publication of application: **27.01.1999**
(21) Application number: 97401772.5
(22) Date of filing: 23.07.1997
(51) Int. Cl.: H04N 7/26

(54) **Video communication system**

(71) Applicant: TEXAS INSTRUMENTS FRANCE, 06271 Villeneuve Loubet Cédex (FR)
(72) Inventor: Thomas, David, Richard, 06650 Opio Cedex (FR)
(74) Representative: Obolensky, Michel

(57) **Abstract**

The present invention provides a video communication system 100 and a method for operating a video communication system 100. An event is monitored with a video camera 112' to generate a sequence of frames of a video image. Video data is selected only from those regions of the video image in which motion exceeds a predetermined level. The selected video data and audio data corresponding to each frame of the video image are compressed before a signal comprising the compressed video data and the compressed audio data is generated and transmitted to a receiver 111''. The receiver 111'' decompresses the received signal to produce audio data and a first portion of said video data. A second portion of the video data for regions of a current frame of the video image that differ from a preceding frame of the video image is predicted from the decompressed audio data. The first and second portions of said video data are then combined to generate a display video image.

## Description

### FIELD OF THE INVENTION

The present invention relates generally to the compression of data in a signal having a video component and an audio component, and more particularly to a method and apparatus for reducing the data transmission requirements of signals transmitted between remote terminals of a video communication system.

### BACKGROUND OF THE INVENTION

Recently, the use of video communication systems has become more prevalent. The more widespread acceptance of video communication systems has been restricted by the relatively poor quality of the displayed video images. This can largely be attributed to the use of the existing telecommunications infrastructure which was designed for the transmission of audio data only.

Current video communication systems generate poor quality video images providing small display areas, jerky motion, blurriness, blocky looking artefacts and in many instances the audio fails to fully synchronise with the video images. This is largely due to group delay introduced by the compression/decompression of the video signal for transmission.

The fundamental objective of recent developments in video communication systems has been to provide the best quality video image within the available data rate. Typically, video data is compressed prior to transmission and decompressed prior to generating an image following transmission.

Various national and international bodies have defined standards for the operation of video communication systems. One such standard is the H.320 video conferencing standard issued by the International Telecommunications Union (ITU).

The ITU H.320 standard supports a wide range of transmission data rates. Sophisticated, video communication systems provide greater levels of data to a single frame of the video image, generating an image having greater resolution. Commonly, the data rates used by video communication systems are 128K bits per second (known as baseband ISDN) and 384K bits per second (known as triple baseband ISDN). To date video communication systems using data rates substantially lower than 128/K bits per second have not been accepted due to the poor quality of the received image.

It should be noted that the audio component and the synchronisation component of the generated signal must be subtracted from these data rates. The most commonly used audio compression standard is the ITU G.728 standard that requires 16K bits per second.

Since the bandwidth is dictated by the available transmission medium, video communication systems requiring lower data rates generally require greater compression of the video image. Conventional compression rates for video compression systems are in the range of 100-to-1 to 300-to-1. However, high compression of the video image will invariably result in a loss in the quality of the video image, particularly in sequences with significant changes from frame-to-frame. High compression of the video image also invariably results in increased group delay due to the computation time required in the coder and decoder.

Recent developments in video communication systems have attempted to alleviate some of the problems described by reducing the level of data required by the receiver for generating the display video image. This has been achieved by selecting and compressing video data only from those regions of the video image containing significant changes from frame-to-frame for transmission to the receiver. However, the quality of the display video image remains compromised where the monitored event comprises a situation where high levels of motion in separate regions of the video image occur, for example in a video conference situation where the monitored event comprises a group of users.

In video conferencing situations users derive a greater comfort factor from systems that are able to generate a display image in which the video component and the audio component are synchronised. Furthermore, it has been found that users are better able to comprehend audio data (speech) where the facial movements of other users are distinct. Therefore, it is desirable to maintain and even enhance the resolution of the display video image in regions comprising the facial features of the user.

### SUMMARY OF THE INVENTION

The present invention provides a video communication system and method for operating a video communication system that reduce the levels of data required by the receiver for generating the display video image. This is achieved by transmitting only video data for regions of successive frames that contain "substantial" differences frame-to-frame. Video data corresponding to the facial region of the "active" user at any instant is predicted from the received audio data.

Since a large part of facial movement that takes place during a conversation is produced to generate spoken information, there is an inherent correlation between the generated speech and the facial features of the user at any instant. Therefore, it is possible to transmit the audio data (speech) to the receiver without the video data that corresponds to these facial features. The received audio data can then be used to predict pixels of the display video image that have changed from a preceding frame, in order that the current frame of the display video image can be reconstructed. This leads to a reduction in the data rate requirements of the video communication system.

Removing the duplication of audio data (speech) and video data corresponding to these facial features reduces the data rate for transmission. Furthermore, since changes of these facial features are derived from the audio data (speech) it enables bidirectional and substantially synchronised audio and video data to be transmitted with a much reduced group delay when compared with conventional video communication systems.

Accordingly, a first aspect of the present invention provides a method for operating a video communication system comprising the steps of; monitoring an event with a video camera to generate a sequence of frames of a video image, selecting video data only from those regions of the video image comprising motion exceeding a predetermined level, compressing video data corresponding to said selected regions and compressing audio data for each of said frames of said video image, generating a signal comprising said compressed video data and compressed audio data and transmitting said signal to a receiver, at a receiver decompressing said received signal to produce audio data and a first portion of said video data, predicting a second portion of the video data for regions of a subsequent frame of the video image that differ from a preceding frame of the video image from said audio data, and combining said first and second portions of said video data to generate a display image.

According to a second aspect of the present invention there is provided a video communication system comprising; means for receiving an input from a video camera arranged for monitoring an event and for generating a sequence of frames of a video image, means for selecting video data only from those regions of the current video image including motion exceeding a predetermined level, a data compression module for compressing video data corresponding to said selected regions and audio data for each of said frames of said video image, means for generating a signal comprising said compressed video data and compressed audio data and transmitting said signal to a receiver, said receiver comprising a data decompression module for decompressing said received signal to produce audio data and a first portion of said video data, means for predicting a second portion of the video data for regions of the current frame of the video image that differ from a preceding frame of the video image from said audio data, and means for combining said first and second portions of said video data to generate a display image.

### BRIEF DESCRIPTION OF THE DRAWINGS

For a more complete understanding of the present invention, and further features and advantages thereof, reference is now made, by way of example, to the following description taken in conjunction with the accompanying drawings, in which;
Figure 1 is a schematic block diagram of a conventional high-specification video communication system;
Figure 2a is a schematic block diagram of a transmission portion of a video communication system in accordance with the present invention;
Figure 2b is a schematic block diagram of a receiving portion of a video communication system in accordance with the present invention;
Figure 3a is a flow diagram illustrating a method of operating the transmitting portion of Figure 2a; and
Figure 3b is a flow diagram illustrating a method of operating the receiving portion of Figure 2b; and
Figure 4 shows example display video image from a conferencing situation illustrating the operation of the video communication system in accordance with the present invention.

For convenience like and corresponding features of the drawings will be referenced by like and corresponding reference numerals where possible.

### DETAILED DESCRIPTION OF THE DRAWINGS

As previously described herein, resolution is lost from the generated video image due to the compression of the video data for transmission and its subsequent decompression. Video communication systems having greater processing power are more capable of implementing the ITU H.320 standard to produce greater quality video images.

Video communication systems using devices such as the TMS320C80 Multimedia Video Processor produced by Texas Instruments Inc. utilize a codec (coder/decoder) having H.320/MPEG-1/YPEG functionality for producing high quality video images. However, with so many variables the quality of the video image generated by the video communication systems can differ greatly. To provide the optimal quality of video image, a video communication system must provide an implementation of the ITU H.320 standard that is capable of determining bit allocation decisions to obtain the best quality video image within the available data rate and bandwidth.

The ITU H.320 standard is capable of supporting a range of compression techniques. Different compression techniques may be implemented to compress different portions of a single video frame according to the content of the video image. For example, a first compression technique may be used for compressing portions of the video data containing a background image that remains substantially constant from frame-to-frame, and a second compression technique may be used for compressing portions of the video data that comprise changes in the foreground image from frame-to-frame as may occur with a user waving his hand or nodding his head.

Furthermore, the operating characteristics of the individual video communication system may effect the quality of the video image perceived by the user. These operating characteristics may make a particular video communication system inherently suitable for certain applications, while unsuitable for other applications.

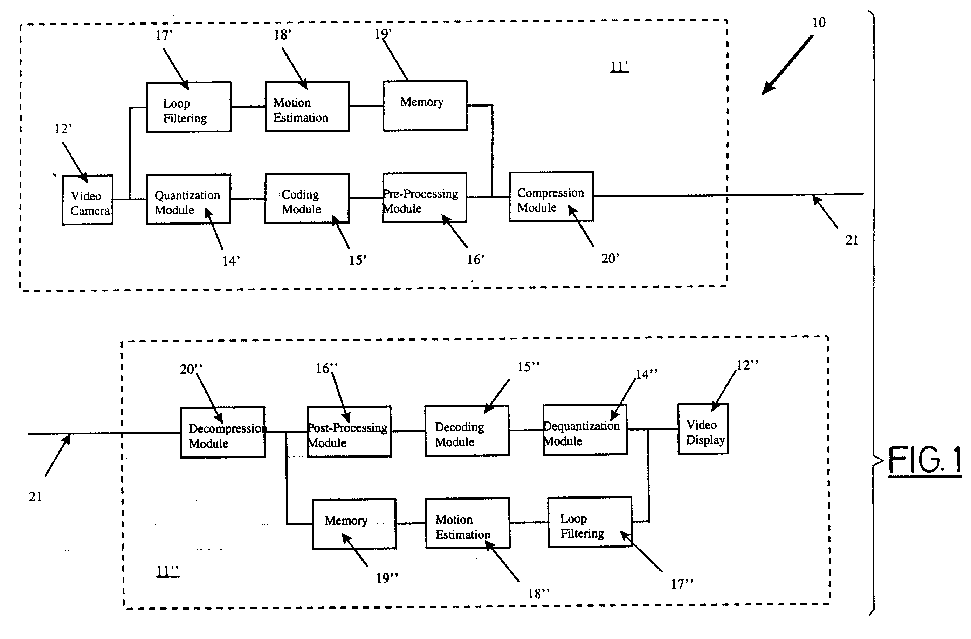

Figure 1 shows a schematic block illustration of a typical high-specification video communication system 10. For convenience, the video communication system 10 will be described in terms of a transmitting portion 11' and a receiving portion 11''. However, it will be understood by the skilled person that generally operation of the video communication will require both the portion 11' and the portion 11'' to be capable of both generating and transmitting video data, and receiving and converting the video data to generate a video image.

The transmitting portion 11' includes a video camera 12', quantization module 14', coding module 15', pre-processing module 16', loop filtering circuit 17', motion estimation module 18', memory 19', and compression module 20'. Similarly, the receiving portion comprises a video display 12'', dequantization module 14'', decoding module 15'', post-processing module 16'', loop filtering circuit 17'', motion estimation module 18'', memory 19'', and decompression module 20''. It should be understood that various components described may perform dual functions dependant upon the portion 11' or the portion 11'' operating in a transmitting or receiving mode of operation. It will should further be understood that the transmitting portion 11' and the receiving portion 11'' are connected by a transmission medium 21, that may comprise a "hard-wired" electrical connection, a fibre optic connection, or a radio frequency connection.

The video camera 12' of the transmitting portion 11' is connected to the quantization module 14'. The quantization module 14' is capable of assigning each bit of the video data received from the video camera 12' to a predetermined quantization level. The quantisation module 14' is further connected to coding module 15' which receives the quantized video data and encodes each 16x16 pixel block in a frame using either an "interframe" or an "intraframe" coding technique. The "interframe" coding technique relies upon error terms used for correction of prediction data contained in a previous reference frame of the video image. Conversely, the "intraframe" coding technique relies upon actual pixel data. Selection of the appropriate coding technique will provide a greater quality video image, but use of the "interframe" coding technique is generally limited to video communication systems of greater complexity.

The pre-processing module 16' receives the encoded video data from the coding module 15' and eliminates the randomly generated noise that may cause single pixel errors originating from the video camera 12'. Subsequent compression of this noise will increase the data transmission requirements of the system and waste data bandwidth of the transmission medium. Although simple low pass filtering can reduce the noise, it generally results in blurring of the resulting video image. Therefore, more complex filtering techniques are used (linear or non-linear filtering) in order that the noise generated by the video camera 12' is reduced, while preserving the resolution of the resulting video image.

The compression module 20' receives the encoded and preprocessed video data and performs a compression process on the video data. The compressed video data is then transmitted via the transmission medium 21 to the receiving module 11'', but is also stored in memory 19' to assist with reducing the data content of subsequently transmitted frames of the video image.

At lower bandwidths and with sequences of frames of the video image that are not effectively compressed (i.e. those involving substantial motion), a reduction of the frame rate generally improves the quality of the video image. At relatively low data rates, as may be necessary due to the available bandwidth of standard transmission media, a frame rate that is too high will result in too few bits of the video image being provided to generate an adequate video image. Typically, video communication systems operating in accordance with the H.320 standard will provide a 128K data rate to produce between 7 and 15 frames per second. However, a lower frame rate may be required during sequences when there is substantial motion between subsequent frames of the video image.

In typical operational situations, the background and various features monitored by the video camera 12' remain substantially stationary from one frame period of the video image to the next frame period. However, movement of a feature between subsequent frame periods will cause pixels reproducing that feature to move as a block.

The encoded video data stored in memory 19' is used by motion estimation module 18' to generate motion vectors that estimate the position of the each pixel or block of pixels according to the position of that pixel or block of pixels in a preceding frame. Since motion between subsequent frame periods may be relatively complex (e.g. a rotating hand), motion vectors are only capable of providing rough approximations of the position of a pixel or block of pixels. Although additional data can be provided to improve the approximation of the position of the pixel (s), the provision of more accurate approximations of the position of the pixel(s) requires the transmission of less correcting data.

The methods for computing motion vectors vary widely between video communication systems since the ITU H.320 standard does not specify how these motion vectors should be obtained. Video communication systems providing limited motion estimation may comply with the H.320 standard, but will typically provide a relatively poor quality video image. In more complex video communication systems utilising devices such as the TMS320C80, effective motion estimation is achieved through software implemented intelligent algorithms.

Following the generation of motion vectors by motion estimation module 18', a further improvement in the quality of the video image is obtained by reducing large errors in the prediction data and estimation vectors. This is achieved by loop filtering module 17' that performs a loop filtering process when using "intraframe" coding techniques.

Referring now to the receiving portion 11'', compressed and encoded video data is received from the transmitting portion 11' via the transmission medium 21. The received video data is decompressed at decompression module 20''. However, the compression algorithms implemented by video communication systems may generate "mosquito noise" in the video data that causes artefacts in the resulting video image. Mosquito noise can be attributed to excessive quantization of the video data resulting in the elimination of important high frequency information along contours in the video image (e.g. the edge between a face and the background). Post-processing module 16'' provides a reduction in the effects of "mosquito noise" by post-processing of the video data prior to the display of the video image.

Following post-processing the video data is passed via decoding module 15'' and dequantization module 14'' to video display 12'' for generation of the video image.

It is preferred that motion estimation and loop filtering be performed by the transmitting module 11'' in order that unnecessary bits of data do not utilize bandwidth that may be more effectively utilized by bits of data that change from frame-to-frame. However, motion estimation can also be performed at the receiving portion 11''.

Furthermore, delays in the transmission of video data and in the generation of the video image result from the need to compress and decompress the video data, together with any inherent delays introduced by the transmission medium 21. Typically therefore, audio data is delayed in order that it may be synchronized with the video data. However, where a reduction in the data rate results in fewer frames of the video image being provided in a defined time period, as may occur where substantial motion occurs between subsequent frames of the video image, a loss of synchronisation may occur between the audio and video data. Therefore, the comfort factor for the user of the video communication system is greater where the delay due to compression of the video data is reduced.

Each of the previously described factors, and additional factors not detailed herein but recognizable to the skilled person, contribute to the quality of the video image perceived by the user of the video communication system. However, it should be understood that although the present invention is described in terms of a video communication system complying with the ITU H.320 standard, the present invention is not limited to systems of the H.320 standard or to factors not specifically detailed herein.

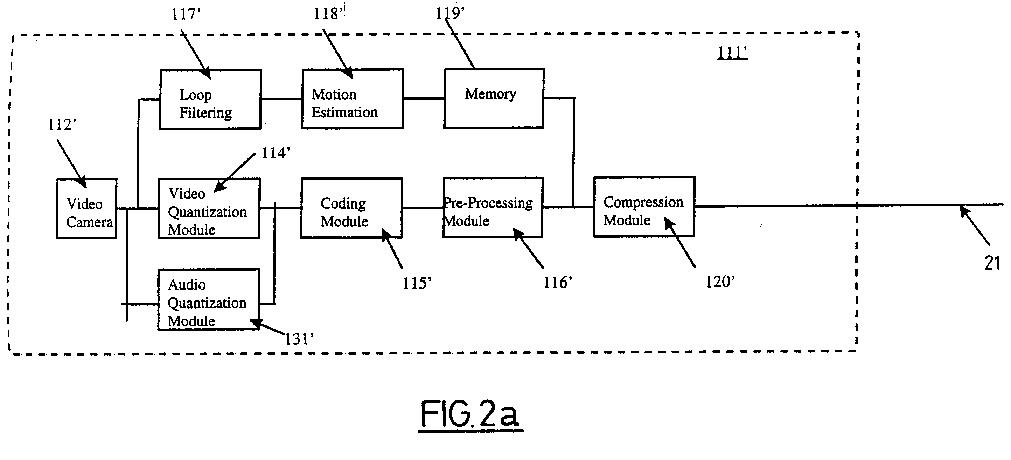

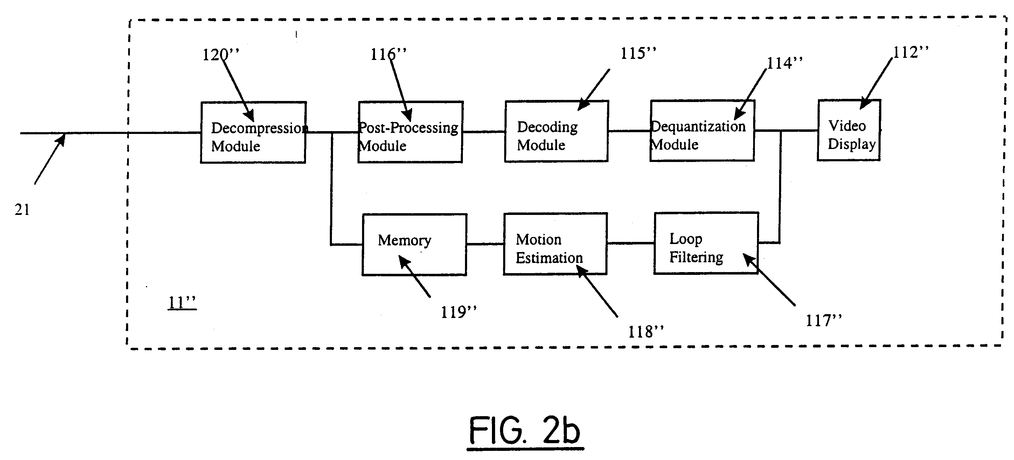

Referring now to Figures 2a and 2b there are shown the transmitting portion 111' and the receiving portion 111' of a video communication system in accordance with the invention. The skilled person will clearly identify that many features of the conventional video communication system illustrated in Figure 1 are retained, and indeed perform like and corresponding functions to similarly identified features illustrated therein. For convenience the operation of portions 111' and 111'' are described in terms of transmitting and receiving video signal respectively. However, in practise both portions 111' and 111'' will be operable in either a transmitting mode of operation or a receiving mode of operation.

Figure 2a illustrates the transmitting portion 111' which differs from the corresponding transmitting portion 11' of Figure 1 merely by the addition of processor 130 between the coding module 115' and the pre-processing module 116', storage unit 132 connected to the processor 130, and by separate video qunatizatin module 114' and audio quantization module 131'.

Similarly, Figure 2b illustrates the receiving portion 111'' which differs from the corresponding receiving portion 11'' of the Figure 1 merely by the addition of the processor 130' between post-processing module 116'' and decoding module 115'', storage unit 132'' connected to the processor 130' and combining module 134.

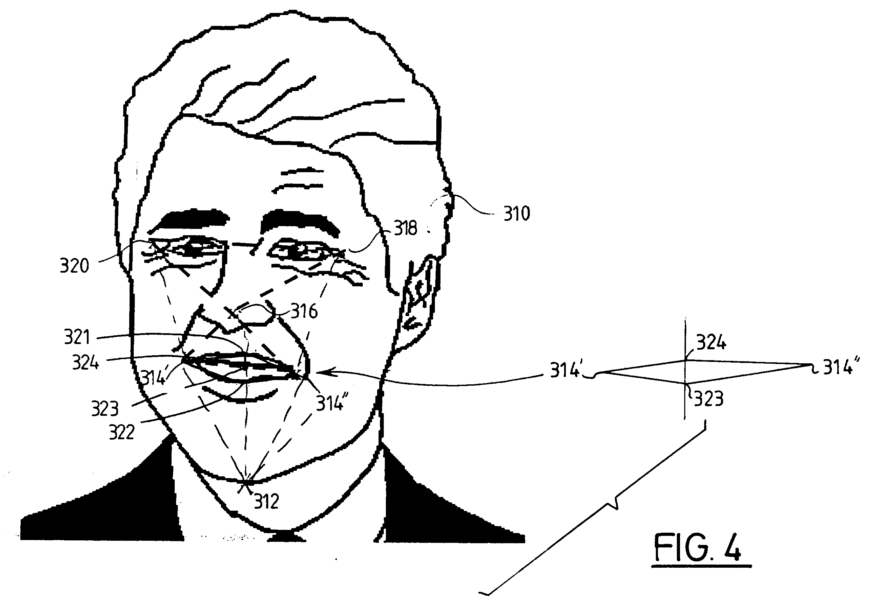

Referring now to Figure 4, an example display video image from a video conferencing situation is illustrated. The display video image comprises the head and shoulder region of a user, monitored by the video camera 112'. The processor 130' selects integers corresponding to predetermined facial features (marked by crosses). For example, the selected integers in Figure 4 are the chin 312, opposing edges of the mouth 314' and 314'' respectively, the nose 316, and the outer edge of each eye 318 and 320 respectively. Since the facial features around the region of the mouth vary substantially during speech these features are selected in more detail for example, around the position of the lips defined by 321, 322, 323 and 324. Details of this approach can be found in the paper "view based and modular eigen spaces for face recongnition"', Pentlan A. et al, IEEE Data Compression Conference, Utah, March 1995.

Preferably, the video image is divided into substantially triangular regions or blocks of pixels. Each of these regions is represented by an eigen feature. In regions where motion is likely to be less frequent (i.e. the background) but assist the user little in his comprehension of the audio data (speech), the regions comprise a larger area of pixels than regions from which the user gains much assistance in comprehension of the audio data (e.g. mouth, chin, eyes, nose). Therefore, eigen features for video data corresponding to the region enclosed by the integers 312, 314, 316, 318, 320, 321, 322, 323 and 324 are representative of a smaller area of pixels than eigen features corresponding to an area of the video image that is external to the region enclosed by the integers.

### TRANSMITTING PORTION

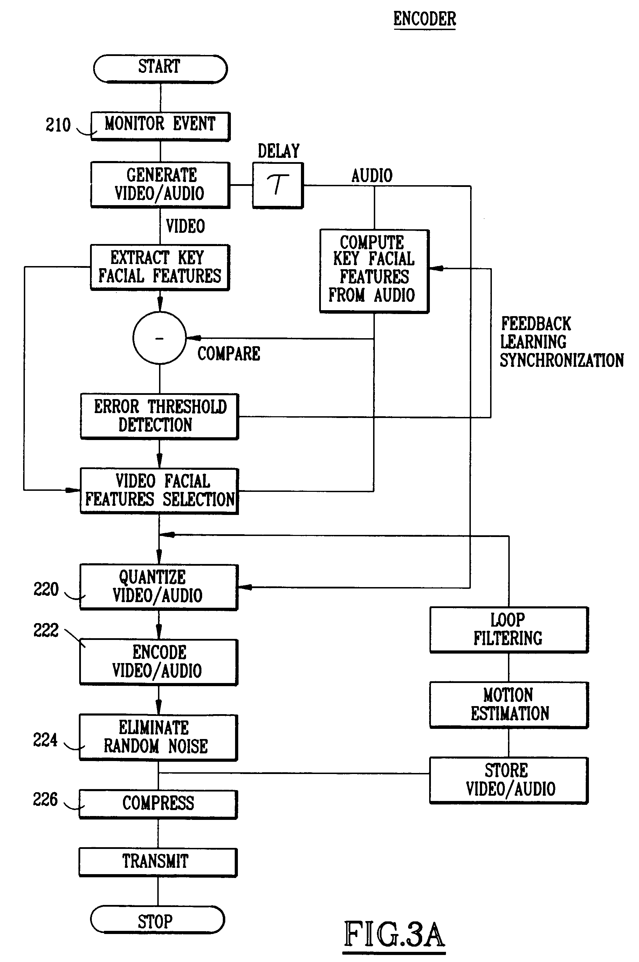

Operation of the transmitting portion 111' of Figure 2a will now be described in detail with reference to Figure 3a and Figure 4. For convenience, the operation of the transmitting portion 111' will be discussed for a situation where the video camera 112' monitors the head and shoulder region of an active user.

Referring firstly to Figure 3a, the transmitting portion 111' of the video communication system 110 monitors an event with video camera 112' (Block 210). Typically, the monitored event will comprise a video conferencing situation where a first user or group of users are monitored by the camera 112'. As is well known in the art, the video camera 112' is arranged to monitor the active user (i.e. the currently speaking user).

Quantization module 114' assigns each bit of the video data received from the video camera 112' to a predetermined quantization level. The processor 130' receives the quantized video data and identifies selected integers of the user facial features. For example, it is commonly known that the facial features which provide user's with the most assistance when comprehending speech are the regions around the eyes, nose, mouth and chin.

The processor 130' assigns each area of the video image to an eigen feature. Typically, eigen features that are representative of regions between the integers have a smaller area of pixels than regions not enclosed by the integers.

It will be appreciated by the skilled person that it is advantageous to assign eigen features representative of a smaller area of pixels to those regions of the video image in which significant motion is probable, and to assign eigen features representative of a greater area of pixels to those regions of the video image in which motion and/or the relevance of the information content of the video data are less. The use of an appropriate digital signal processor, such as the TMS320C6X manufactured by Texas Instruments Inc., will provide a system that is reactive to the information content of the video data at any instant.

The processor 130' synchronizes the corresponding speech patterns accompanying the video image by adding a fixed delay equivalent to any differences in delay occurring inthe video quantization module 114' and audio quantization module 131'. The processor 130' then comlputes using an algorithm and/or look up table stored in the storage unit 132' , the key eigen features of the face corresponding to the quantized audio data. For example the location of the corners of the mouth (314' and 314''), the position of the top of the upper lip 321', the position of the lower part of the upper lip 324', the position of the upper part of the lower lip 323 and the position of the lower part of the lower lip 322 are dependent on the speech associated with a particular frame of video. In addition the position of the corners of the mouth (314' and 314'') relative to the chin 312 and nose 316 and the eyes (318 and 320) are again dependent on the speech associated with a particular frame of video.

The computed eigen features are compared to the features that have been determined by analysis of the data received from the video quantization module 114'. If the error between the eigen features computed from the data received from the audio quantization module 131' and the corresponding eigen features determined from the data obtained from the video quantization module are below a predefined limit the corresponding eigen features are not forwarded to the coding module 115'. To further reduce the data rate required for transmission of the video it is possible that the video communication system 110 could undergo a period of 'learning' where the parameters of the algorithm and/or look up table can be modified to reduce the error between the eigen features computed from the data received from the audio quantization module 131' and the corresponding eigen features determined from the data obtained from the video quantization module 114'. During the period of 'learning' synchronization of the receiver section of the video communciation system 111' is achieved by transmission of information relating to the modicications to the algorithms and/or look up table that take place in the encoding section of the video communication system (110).

The coding module 115' receives the video data from the processor 130' and encodes residual eigen feature in a frame of the video image (Block 222).

The pre-processing module 116' receives the encoded video data from the coding module 115' and eliminates the randomly generated noise that may cause single pixel errors originating from the video camera 12' (Block 224).

Compression module 120' receives the encoded and pre-processed video data and performs a compression process on the video data (Block 226). The compressed video data is then transmitted via the transmission medium 121 to the receiving module 111''. (Block 228), but is also stored in memory 119' (Block 230) to assist with reducing the data content of subsequently transmitted frames of the video image.

In typical operational situations, the background and various features monitored by the video camera 112' remain substantially stationary from one frame period of the video image to the next frame period. The encoded video data stored in memory 119' is used by motion estimation module 118'' to generate motion vectors that estimate the position of each residual eigen feature according to the position of that residual eigen feature in a preceding frame (Block 232). Since motion between subsequent frame periods may be relatively complex (e.g. a rotating hand), motion vectors are only capable of providing rough approximations of the position of an eigen feature. Although additional data can be provided to improve the approximation of the position of the eigen feature(s), the provision of more accurate approximations of the position of the eigen feature(s) requires the transmission of less correcting data.

Following the generation of motion vectors by motion estimation module 118', a further improvement in the quality of the video image is obtained by reducing large errors in the prediction data and estimation vectors. This is achieved by loop filtering module 117' that performs a loop filtering process using "intraframe" coding techniques (Block 234).

During an initial period of operation, video data corresponding to each residual eigen feature of the display video image is selected (Block 218), quantised (Block 220), encoded (Block 222), filtered to eliminate random noise (Block 224), compressed (Block 226), and transmitted to receiving portion 111'' (Block 228). Similarly, the transmitting portion 111' operates in accordance with the initial period of operation for a new video image, as may occur where a new user becomes the active user. Operation of the transmitting portion 111' of the video communication system during this period substantially corresponds with the operation of the transmitting portion 11' of the prior art video communication system of Figure 2a.

During subsequent periods of operation, the processor 130' identifies regions between the selected integers (312, 314, 316, 318, 320) and determines whether the eigen features calculated from the audio quantized data are within predetermined limits of the eigen features extracted from the video quantized data. A substantial difference in the eigen features calculated and extracted from the video quantized data is indicative of the following; (i) the monitored user is speaking but the algorithm and/or tables need training to the specific eigen features of the speaker; (ii) the frame of the video image of the monitored active user differs from the preceding frame (i.e. motion of the active user); (iii) the monitored event has changed.

### (i) Speech, No Motion

Processor 130' identifies for comparison eigen features of the display video image that substantially correspond with regions of the display video image that move with speed. For example, the head and shoulders of the monitored user may remain stationary for a sequence of frames although there will be motion of the regions around the eyes, nose and mouth as the monitored active user speaks.

For example, when expressing the syllable "Ahh" the mouth is opened wide and consequently the chin drops, but eyes and nose remain substantially stationary.

Consequently by detecting the audio quantization data corresponding to the syllable "Ahh" one can predict the corresponding movement of the eigen features representing the chin (312) the corners of the mouth (314' and 314''), the top of the upper lip (321), the bottom of the upper lip (324), the top of the lower lip (323), the bottom of the lower lip (322) relative to the eyes (318 and 320) and the nose (316). The calculated movement of the eigen features is smoothed over a number of frames corresponding to the initial formation, duration of the syllable and transition to the next syllable.

### (ii) Speech and Motion

Processor 130' identifies regions of the display video image that substantially correspond with regions of the preceding display video image. For example, the shoulders of the monitored user may remain stationary for a sequence of frames, but the user may change the orientation of his head and there may be motion of the regions around the eyes, nose and mouth as the monitored active user speaks.

Processor 130' selects those regions of the monitored video image where motion greater than a predetermined level is detected. This may be achieved by means of additional integer reference points selected by the processor 130', where a change in the position of eigen features between adjacent integers is indicative of motion.

For example, if the active user changes orientation of his/her head by looking to the right, the distance between the integers 320 and 318 and between 314' and 314'' would decrease and the right ear would go out of display video image. Consequently the difference between the eigen features calculated by processor (130') from the audio quantized data and the eigen features extracted from the video quantized data would increase beyond the present limit. Under these conditions the eigen features extracted from the video quantized data are passed onto the coding module (115') and subsequently compressed and trasmitted to the receiver. If the movement of the head to the right persists for a number of video frames the 'learning' synchronization at the coding module 115' of the video communication system will modify the algorithm and/or lookup tables to produce the corresponding eigen features to the head turned right position. During the 'learning' synchronization period the changes in the algorithm and/or lookup table are transmitted to the receiver of the video communication system. The net result is the gradual reduction of the difference between the eigen features calculated from the audio quanitzed data and those extracted from the video quantized data until they are within the preset limits such that the eigen features are not passed to the coding module (115') for subsequent transmission to the receiver of the video communication system.

However, in general use the head and shoulders of the monitored user may remain stationary for a sequence of frames while the user emphasizes his/her speech by hand motions. Therefore, all video data except that corresponding to the hand of the user may be excised for transmission, the eigen features being constructed at the receiver of the video communication system from the corresponding audio.

### (iii) Monitored Event Changed

Operation of the transmitting portion where a change in the monitored event occurs, as for example a change of active user, will substantially correspond to the initial period of operation.

The eigen features of the active user are extracted from the video quantized data and sent to the coding module (115') for subsequent transmission to the receiver of the video communication system. As the active user starts to speak, the processor (130') calculates the eigen features from the audio quantized data using algorithms and/or lookup tables. The eigen features extracted from the video quantized data are compared to those that are calculated from the audio quantized data. If the error is above a preset limit the eigen features extracted from the video quantized data are forwarded to the coding module (115') for subsequent transmission to the receiver of the video communication system. During this initial period of operation the 'learning' synchronisation sequence modifies the algorithm and/or lookup tables are modified to reduce the error between the eigen features extracted from the video quantized data and that calculated by the processor (130') to be within the preset limits. During the 'learning' synchronization period the changes in the algoritm and/or lookup table are transmitted to the receiver of the video communication system.

### RECEIVING PORTION

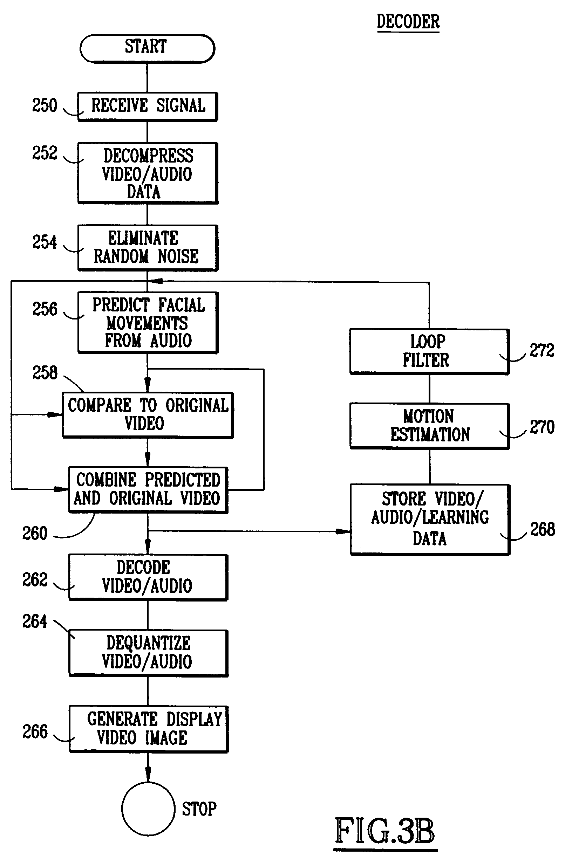

Operation of the receiving portion 111'' of Figure 2b will now be described in detail with reference to Figure 3b and Figure 4.

Referring firstly to Figure 3b, the receiving portion 111'' receives a video signal from the transmitting portion 111' corresponding to an event monitored with video camera 112' (Block 250).

Decompression module 120'' decompresses video and audio data from the received signal (Block 252). The video and audio data is then filtered by the post processing module (116'') to remove noise introduced by the compression (Block 254).

The filtered video and audio data and any information transmitted during the 'learning' synchronization period are received by the processor 130''. The processor 130'' reconstructs the eigen features from the audio data either using an algorithm and/or a lookup table modified by information transmitted during the "learning" synchronization period.

In the case of the period when the encoder section of the video communication system is in the 'learning' synchronization period, the processor 130'' insert only the eigen features reconstructed from the audio data that are not transmitted from the encoder with the video data.

For video frames where the active user is moving, for example if the active user changes orientation of his/her head by looking to the right, the distance between the integers 320 and 318 and between 314' and 314'' would decrease and the right ear would go out of display video image. Consequently the difference between the eigen features calculated by processor (130'') form the audio quantized data and the eigen features extracted from the video quantized data would increase beyond the preset limit. Under these conditions the eigen features extracted from the video quantized data are passed onto the decoding module (115'')and subsequently decompressed and displayed. If the movement of the head to the right persists for a number of video frames the 'learning' synchronization at the coder of the video communication system will modify the algorithm and/or lookup tables to produce the corresponding eigen features to the head turned right position. The updated information is transmitted to the receiver enabling a new set of eigen features to be generated from the audio data by the processor (130'') corresponding to the head turn right position and subsequently these eigen features are inserted into the video data after the 'learning' synchronization period has been completed.

For video frames where the active user is speaking and the head is deemed to be stationary and the system has been successfully through the 'learning' synchronization period all the eigen features reconstructed from the audio data can be inserted into the video data stream. Under these circumstances one achieves synchronization of the audio and video, minimal delays in transmission due to reduced data rates and a high frame refresh rate leading to an optimum comfort factor from the system.

Since the system only inserts eigen features that are reconstructed from the audio data when they are not present in the video data stream the receiver section of the video communication system is to all intense and purposes compatible with existing video telephony systems as outlined in Figure 1. The system will operate as if it is in the 'learning' synchronization period with reduced synchronization between audio and video, increased delay in transmission and lower frame refresh rates i.e. without the improved comfort factor for the user.

In addition one can store the video and audio data and any information transmitted during the 'learning' synchronization period within a memory for reconstruction at a later date.

Following the combination of the received and reconstructed portions of the video data, the video data is passed via coding module 15'' (Block 262) and quantization module 14'' (Block 264) to video display 12'' for generation of the video image (Block 266).

Video data from the combined first and second portions of the video image may be stored in storage unit 132'' prior to quantization (Block 268). The stored video data may be used for comparing eigen phases of a current frame of the video image with eigen phase of a preceding frame of the video image or may be used for refreshing eigen features of the current frame of the video image if required.

It is preferred that motion estimation and loop filtering be performed by the transmitting module 111' in order that unnecessary bits of data do not utilize bandwidth that may be more effectively utilized by bits of data that change from frame-to-frame. However, motion estimation can also be performed at the receiving portion 111''.

Each of the previously described factors, and additional factors not detailed herein but recognizable to the skilled person, contribute to the quality of the video image perceived by the user of the video communication system. However, it should be understood that although the present invention is described in terms of a video communication system complying with the ITU H.320 standard, the present invention is not limited to systems of the H.320 standard or to factors not specifically detailed herein.

During an initial period of operation, video data corresponding to each eigen feature of the display video image is received from the transmitting portion 111' (Block 250). The receiving portion 111'' operates in accordance with the initial period of operation for a new video image, as may occur where a new user becomes the active user. Operation of the receiving portion 111'' of the video communication system during this period substantially corresponds with the operation of the receiving portion 11'' of the prior art video communication system of Figure 2b.

### (i) Speech, No Motion

The filtered video and audio data and any information transmitted during the 'learning' synchronization period are received by the processor 130''. The processor 130'' reconstructs the eigen features from the audio data either using an algorithm and/or a lookup table modified by information transmitted during the "learning" synchronization period.

In the case of the period when the encoder section of the video communication system is in the 'learning' synchronization period, the processor 130'' insert only the eigen features reconstructed from the audio data that are not transmitted from the encoder with the video data.

For video frames where the active user is moving, for example if the active user changes orientation of his/her head by looking to the right, the distance between the integers 320 and 318 and between 314' and 314'' would decrease and the right ear would go out of display video image. Consequently the difference between the eigen features calculated by processor (130'') form the audio quantized data and the eigen features extracted from the video quantized data would increase beyond the preset limit. Under these conditions the eigen features extracted from the video quantized data are passed onto the decoding module (115'')and subsequently decompressed and displayed. If the movement of the head to the right persists for a number of video frames the 'learning' synchronization at the coder of the video communication system will modify the algorithm and/or lookup tables to produce the corresponding eigen features to the head turned right position. The updated information is transmitted to the receiver enabling a new set of eigen features to be generated from the audio data by the processor (130'') corresponding to the head turn right position and subsequently these eigen features are inserted into the video data after the 'learning' synchronization period has been completed.

For video frames where the active user is speaking and the head is deemed to be stationary and the system has been successfully through the 'learning' synchronization period all the eigen features reconstructed from the audio data can be inserted into the video data stream. Under these circumstances one achieves synchronization of the audio and video, minimal delays in transmission due to reduced data rates and a high frame refresh rate leading to an optimum comfort factor from the system.

Since the system only inserts eigen features that are reconstructed from the audio data when they are not present in the video data stream the receiver section of the video communication system is to all intense and purposes compatible with existing video telephony systems as outlined in Figure 1. The system will operate as if it is in the 'learning' synchronization period with reduced synchronization between audio and video, increased delay in transmission and lower frame refresh rates i.e. without the improved comfort factor for the user.

In addition one can store the video and audio data and any information transmitted during the 'learning' synchronization period within a memory for reconstruction at a later date.

For example, when expressing the syllable "Ahh" the mouth is opened wide and consequently the chin drops, but eyes and nose remain substantially stationary.

Consequently, the number of eigen phases between the chin (312) and each edge of the mouth (314',314''), and the nose (316), and between each edge of the mouth (314' ,314'') and nose (316) will increase. Therefore, the display video image generally corresponds with the preceding display video image where the users mouth is closed, except in those regions between the mouth, nose and chin.

### (ii) Speech and Motion

The filtered video and audio data and any information transmitted during the 'learning' synchronization period are received by the processor 130''. The processor 130'' reconstructs the eigen features from the audio data either using an algorithm and/or a lookup table modified by information transmitted during the "learning" synchronization period.

In the case of the period when the encoder section of the video communication system is in the 'learning' synchronization period, the processor 130'' insert only the eigen features reconstructed from the audio data that are not transmitted from the encoder with the video data.

For video frames where the active user is moving, for example if the active user changes orientation of his/her head by looking to the right, the distance between the integers 320 and 318 and between 314' and 314'' would decrease and the right ear would go out of display video image. Consequently the difference between the eigen features calculated by processor (130'') form the audio quantized data and the eigen features extracted from the video quantized data would increase beyond the preset limit. Under these conditions the eigen features extracted from the video quantized data are passed onto the decoding module (115'')and subsequently decompressed and displayed. If the movement of the head to the right persists for a number of video frames the 'learning' synchronization at the coder of the video communication system will modify the algorithm and/or lookup tables to produce the corresponding eigen features to the head turned right position. The updated information is transmitted to the receiver enabling a new set of eigen features to be generated from the audio data by the processor (130'') corresponding to the head turn right position and subsequently these eigen features are inserted into the video data after the 'learning' synchronization period has been completed.

For video frames where the active user is speaking and the head is deemed to be stationary and the system has been successfully through the 'learning' synchronization period all the eigen features reconstructed from the audio data can be inserted into the video data stream. Under these circumstances one achieves synchronization of the audio and video, minimal delays in transmission due to reduced data rates and a high frame refresh rate leading to an optimum comfort factor from the system.

Since the system only inserts eigen features that are reconstructed from the audio data when they are not present in the video data stream the receiver section of the video communication system is to all intense and purposes compatible with existing video telephony systems as outlined in Figure 1. The system will operate as if it is in the 'learning' synchronisation period with reduced synchronization between audio and video, increased delay in transmission and lower frame refresh rates i.e. without the improved comfort factor for the user.

In addition one can store the video and audio data and any information transmitted during the 'learning' synchronization period within a memory for reconstruction at a later date.

Processor 130'' receives video data for only those regions between selected integers where the number of eigen phases is different from the preceding display video image as described in reference to (i).

### (iii) Monitored Event Changed

Operation of the receiving portion 111'' where a change in the monitored event has occurred, as for example a change of active user, will substantially correspond to the initial period of operation. Video data corresponding to each eigen phase of the display video image is received from the transmitting portion 111' (Block 228).

While the present invention has been described by the foregoing detailed description, it will be understood by those skilled in the art that various changes, substitutions and alterations may be made to elements of the video communication system of the invention without departing from the spirit and scope of the invention.

## Claims

1. A method of operating a video communication system comprising;
monitoring an event with a video camera to generate a sequence of frames for forming a video image;
selecting video data only from those regions of a current frame of the video image that are different from corresponding regions of a preceding frame of the video image;
compressing video data corresponding to said selected regions of the current frame of the video image and audio data for each of said frames of said video image;
generating a video signal comprising compressed video data and compressed audio data and transmitting said video signal to a receiver;
receiving said transmitted video signal at a receiver;
decompressing said received video signal to produce audio data and a first portion of said video data;
predicting a second portion of the video data for regions of a current frame of a video image that differ from a preceding frame of the video image from said audio data; and
combining said first and second portions of said video data to generate the current frame of a display video image.

2. The method as claimed in Claim 1 further comprising;
performing the step of identifying regions of the current frame of the video image that differ from a preceding frame of the video image.

3. The method as claimed in Claim 1 or Claim 2 further comprising;
generating an audio component from said audio data.

4. A video communication system comprising;
a video camera for monitoring an event and for generating a sequence of frames for forming a video image;
means for selecting video data only from those regions of a current frame of the video image that are different from corresponding regions of a preceding frame of the video image;
a data compression module for compressing video data corresponding to said selected regions of the current frame of the video image and audio data for each of said frames of said video image;
means for generating a video signal comprising said compressed video data and compressed audio data and transmitting said video signal to a receiver;
a data decompression module for decompressing a received video signal to produce audio data and a first portion of said video data;
means for predicting a second portion of the video data for regions of a subsequent frame of the video image that differ from a preceding frame of the video image from said audio data; and
means for combining said first and second portions of said video data to generate a display image.

5. The video communication system as claimed in Claim 4 further comprising;
means for performing the step of identifying regions of a subsequent frame of the video image that differ from a preceding frame of the video image.

6. The video communication system as claimed in Claim 4 or Claim 5 further comprising;
means for generating an audio component from said audio data.
